(19) Europäisches Patentamt / European Patent Office / Office européen des brevets

(11) **EP 3 422 280 B1**

(12) **EUROPEAN PATENT SPECIFICATION**

(45) Date of publication and mention of the grant of the patent:
**04.01.2023 Bulletin 2023/01**

(21) Application number: **17200395.6**

(22) Date of filing: **07.11.2017**

(51) International Patent Classification (IPC):
**G06Q 50/02** *(2012.01)* **G06Q 10/04** *(2012.01)*

(52) Cooperative Patent Classification (CPC):
**G06Q 50/02; G06Q 10/04**

(54) **A METHOD FOR FORECASTING THE PARAMETERS OF A PHENOMENON OR THE ACTIVITIES OF AN OBJECT, PARTICULARLY ANIMATE, IN A GIVEN GEOGRAPHIC AREA**

VERFAHREN ZUR VORHERSAGE DER PARAMETER EINES PHÄNOMENS ODER DER AKTIVITÄTEN EINES OBJEKTS, INSBESONDERE ANIMIERT, IN EINEM VORGEGEBENEN GEOGRAFISCHEN GEBIET

PROCÉDÉ PERMETTANT DE PRÉVOIR LES PARAMÈTRES D'UN PHÉNOMÈNE OU LES ACTIVITÉS D'UN OBJET, EN PARTICULIER D'UN OBJET ANIMÉ DANS UNE ZONE GÉOGRAPHIQUE DONNÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017 PL 42207417**

(43) Date of publication of application:
**02.01.2019 Bulletin 2019/01**

(73) Proprietor: **SIEC BADAWCZA LUKASIEWICZ-INSTYTUT LOTNICTWA**
**02-256 Warszawa (PL)**

(72) Inventors:
• **Kacprzak, Mariusz**
  **96-300 Zyrardow (PL)**
• **Nasilowska, Sylwia**
  **05-652 Pniewy (PL)**

(74) Representative: **AOMB Polska Sp. z.o.o.**
**ul. Rondo Ignacego Daszynskiego 1**
**00-843 Warsaw (PL)**

(56) References cited:
**EP-B1- 1 864 572        US-A1- 2013 317 749**
**US-A1- 2014 303 814**

• **BOHMANOVA J ET AL: "Temperature-Humidity Indices as Indicators of Milk Production Losses due to Heat Stress", JOURNAL OF DAIRY SCIENCE, AMERICAN DAIRY SCIENCE ASSOCIATION, US, vol. 90, no. 4, 4 January 2007 (2007-01-04), pages 1947-1956, XP026955850, ISSN: 0022-0302 [retrieved on 2007-04-01]**

**Description**

The invention relates to a method for modelling phenomena and processes occurring in the atmosphere, in particular using high-resolution satellite images, as well as an arrangement for realising the method according to the invention.

There are numerous methods and models allowing the estimation of weather parameters on a global scale. Weather forecast models are based on information from networks of ground meteorological stations, probings, buoys or remote sensing data. They use historical measurements in order to provide a technique enabling the estimation of current and prediction of future weather conditions using cutting edge techniques for modelling the condition of the atmosphere. The outcome is maps of weather parameters and their forecast with precision higher than a ground monitoring network. These are models being developed by the European Centre for Medium-Range Weather Forecasts (ECMWF), Global Forecast System (GFS) developed by National Centers for Environmental Prediction (NCEP) NOAA, Meteoblue or ICM of the Warsaw University.

However, there are few methods and models that would enable quick forecasting of phenomena and processes which do not belong to the group of weather processes, but to a high extent depend on them, e.g. the activity of animate natural components (animals, plants), the effectiveness of plant protection agents, etc.

European patent EP1864572B1 discloses a method for predicting depth distribution of predetermined water temperature zone, method for predicting fishing ground of migratory fish and a system for delivering fishing ground prediction information of migratory fish. More specifically, it discloses a method for forecasting, by calculation, the depths (zones) of occurrence of various fish species in water with a temperature changing along with depth. Part of the data is processed based on mathematical equations specified in this patent, which allow correlating different types of measurement data. The model is based on water density measured at selected depths as well as water temperature, salinity and pressure. The thermal data from the satellite images is used as input and a number of parameters must be measured as part of the calibration step. The environment in which the fish move should be carefully examined. This solution works only for the water environment and for fish - it relates in particular to the prediction of optimal fishing grounds and cannot be easily used for other objects, in particular animate objects like, e.g. bees. It is not related to the effectors, which are technical devices that perform automatic actions in specific places

Article Temperature-Humidity Indices as Indicators of Milk Production Losses due to Heat Stress [Bohmanova J et al, Journal of dairy science, American dairy science association, vol. 90, no. 4, 2007-01-04, 1947-1956] shows the link between stress caused by temperature and humidity and milk production (for cows). In this article, meteorological data from two weather stations (in Arizona and Georgia) were analyzed with test day milk yield data from herds near weather stations. Its purpose was to identify the most appropriate temperature-humidity index (THI) to measure losses in milk production due to heat stress in the semiarid climate of Arizona and the humid climate of Georgia. It has been proven that THI is related to dairy production - differences in thresholds of heat stress were found among indices and between regions. The document does not describe the processes that can be undertaken in the event of unfavourable conditions. Effects that can be used and, consequently, lead to the optimization of milk production are not presented.

Document US 2013/317749 A1 discloses a system, method and program for providing infrastructure centric weather forecasts. A computer applies a grid to a forecast area, locates infrastructure, e.g. power grid infrastructure, and determines weather effects on infrastructure in each grid cell, whereby a targeted selection module performs various refinement iterations. Based on the calculations / forecasted weather, there are no actions of machines or actuators performed. Only the potential impact of the calculated weather parameters on the infrastructure in the indicated area of the defined coordinate grid is calculated. Based on this solution document, there can only be created some action plans that can minimize the effects on the expected weather. The system does not include effectors that take specific actions, in specific geographic locations and based on specific data calculated from the model.

Document US 2014/303814 A1 discloses an aerial farm robot system for crop dusting, planting, fertilizing, application of plant protection products and other field jobs. An aerial farm robot includes means for moving above ground and plants, means for receiving directions to carry out farming tasks, means for delivering materials (pesticides, seeds, fertilizer etc.) to the field and plants. This document relates also to a method of farming where one or more autonomous flying robots are used to carry out farming tasks. The solution is mainly based on technical elements and does not disclose how to get input data to the system. It is also not disclosed how the input data can be processed to obtain the desired result, and what are the calibration / configuration data for the subsystem operating in the field.

Therefore, the purpose of the present invention is to develop such a method, which would enable easy and fast use of different types of data from different types of measuring devices, to enable forecasting the parameters of virtually any phenomena or the activities of objects, particularly animate, in the given geographic area, and conveying the outcomes to interested people in an intelligible form.

The object of the invention is a method for forecasting the activities of an animate object, the animate object being pollinators such as bees and bumblebees, in a given geographic area, comprising the steps of:

a) performing the measurements of physical quantities, characterising the condition of the atmosphere and/or soil and/or plantlife;

b) recording the data acquired in step a) in the first database on the first server collecting the source data;

c) processing the source data recorded in the first database in step b) by a calculation unit, comprising the steps of:

i. in a case when the data is not presented in a raster form, converting the data to a raster form;

ii. in a case when the data has no georeference, providing the data with georeference, preferably with georeference in a selected coordinate system by integration with existing cartographic data of the given area, to the form of layers;

iii. in a case when there are empty raster cells, filling empty raster cells by conducting operations such as, e.g.: extrapolation, interpolation or triangulation of data;

iv. determining the final geometric parameters of the raster: cropping and rescaling the raster into m- columns and n-rows, with a specified GSD (Ground Sample Distance, being the distance between the centres of individual pixels of a raster measured in real terrain, expressed in [m]);

v. calculating statistics for the given map/layer based, among others, on historical data, creating the statistics of the frequency of occurrence of specified values of given parameters and grouping the values (classification);

vi. checking the criteria, in particular the threshold values, for the possibility of forecasting the parameters of a phenomenon or the activities of an object, particularly animate, in the given geographic area, by checking whether the values in specified places: points or pixels of a raster image created in step iv in the individual types of layers or "$type_n$" maps, fulfil the predefined criteria, and assigning a value of zero if they do not fulfil them;

vii. creating a proper number of value classes "p-classes", performed manually (if the classification thresholds are known) or preferably using the ISOCLASS/ISODATA algorithm, k-means clustering, based on statistical values and/or Euclidean distances in the space of values;

viii. filling the cells of a raster generated based on the procedure described in the previous steps with integer values, corresponding to the label of a given class, taking on values from 0 to p, where p corresponds to the value of the given pixel, obtained in the process of classification;

d) recording the data acquired in step c) in the second database;

e) generating, based on the data recorded in step d), for the specified area, the Aggregated Raster Local Temporary Meteorological Index (ARLTMI) via steps comprising:

e1) calculating the ARLTMI index based on the weight of the given layer (w) and values from 1 to p, for individual layers, according to the formula:

$$f\_temp = \sqrt[2]{\sum_1^{lwz}(w * p_{type}^2)} \,,$$

where

lwz: a number equal to the number of raster source layers,
$p_{type}$: the number of classes in the given layer
f_temp: a temporary index, based on which the final value of a raster cell is calculated in the form of an integer of the ARLTMI index;
or

e2) in a case when there is a dependence between layers (type) defined by an empirical formula or a formula derived from the literature, and/or there is a proven dependence between layers - it is more preferable to use said empirical formula or the one derived from the literature;

e3) creating final class ranges for the index based on the analysis of f_temp, from 0 to f,
where

0: corresponds to the area excluded from modelling,
1: is the minimum value,
f: is the maximum value;

e4) filling the cells of the ARLTMI raster with integer values, corresponding to the label of the given class, from 0 to f;

a) generating, using a calculation unit - based on the ARLTMI acquired in step e) - at least one map, depicting the forecast parameters of a phenomenon or activities of an object, particularly animate, in the given area and recording this at least one map in the third database connected to a server with Internet access

b) sharing at least a fragment of the map acquired in step f) on a user terminal with Internet access, in response to the user's query introduced via the user interface implemented on this terminal;

wherein the physical quantities measured in step a) are chosen form meteorological and environmental parameters, in particular: temperature, pressure, relative humidity, radiance, wind speed, land morphology;

wherein the measurements in step a) are performed by means of satellites or other sensors distributed on the ground or moving in the air, using dedicated meteorological sensors;

wherein upon receiving a query from the user terminal, the calculation unit processes the collected data and sends back to the user terminal the information/recommendations involving in particular the suggested time, place and type of actions necessary to undertake in relation to agricultural activity, namely relating to in which places sprayings are suggested due to the activity of pathogens, and in which places sprayings may be associated with damage to pollinators such as bees and bumblebees, which information the terminal presents to the user,

wherein effectors in form of automatic sprayers are used, said effectors arranged to be capable of communicating with the third server with Internet access and of downloading data from the third database placed on this server, said effectors being programmed and configured such that the action of these effectors, in particular the time, place and intensity of sprayings, depends on the data downloaded from the third database, wherein said effectors operate automatically based on said data downloaded from the third database.

The statistics calculated in step c) v. are necessary to correctly conduct the operation in step c) vi. The calculations involve, e.g. the data range, minimum, maximum and statistical figures such as the mean or the standard deviation, both for the whole and for the individual classes/maps/layers.

The historical data mentioned in step c) v. has particular significance due to the creation of proper value ranges for each of the calculated layers.

The criteria, in particular the threshold values, used in step c) vi. are mainly chosen from values characterising the weather, e.g. the ranges of temperatures, humidity etc. One example may be the threshold wind speed above which the given phenomenon is absent. This may also be a geographic criterion, e.g. woodiness, in a case when the modelled phenomenon involves land areas not covered by forests. During the operation of checking the criteria, the end information may be returned, e.g. in the form of logical information YES (fulfils the criterion) or NO (does not fulfil the criterion).

When checking the criteria (threshold values), each case of modelling and assigning "zero" values should be resolved separately. Such a zero value may mean, e.g. that the given parameter in a specified point should not be considered in the analysis for a particular reason, e.g. the absence of data for this point. In a general case, the "zero" value is assigned when it is impossible to model the given phenomenon/activity.

Depending on the analysed case, the "zero" value mentioned above may be interpreted in numerous manners - e.g. when modelling the activity of bees, the zero value in the given point is positive information for farmers, because they may use plant protection agents in an area corresponding to the given point, but the same information is negative for bee-keepers, because the absence of the activity of bees means a smaller amount of produced honey, etc.

Classification using automatic algorithms of proceeding mentioned in step c) vii. is an example of unsupervised (automatic) classification, whose operator has limited influence on the course of the classification process. The maximum number of classes and/or maximum level of deviation for values within a class are defined automatically.

The ISOCLASS/ISODATA algorithm, k-means clustering, is an example of unsupervised classification, meaning automatic, where the operator has limited influence on the course of the process. The maximum number of classes and/or maximum level of deviation for values within a class are defined.

The "p" value which corresponds to the number of classes for the given type of data (given type layer) is preferably an integer. Depending on the calculated statistics and on the characteristics of data (in individual type layers), the created number of p-classes will be different, or more preferably the same.

The figures recorded in a raster form in step d) constitute input data for further calculations, according to the modelling/forecasting algorithm.

The source layers mentioned in step e1) are all types of sources which are considered when realising the modelling/forecasting algorithm. Source layers (data) necessary in the given application of the present invention which should be processed according to the procedure described in step c). What matters is that layers with weather parameters may be extended by layers representing additional environmental features, e.g. the parameters of plantlife, soils or hydrosphere:

- for plantlife these may be plantlife indicators, water content, the amount of nutrients;

- for soils it may be the value of pH, mineral composition, water content;

and additionally, the criteria of anthropogenic pressure may be considered, e.g. the amount of fertilising or the amount of domestic contaminants in the given region.

The final values of the ARLTMI index calculated in step e3) are the values delivered to the end user. The values of the ARLTMI index are interpreted as follows - the lowest values for the most disadvantageous situation and the highest values for the most preferable situation from the standpoint of the modelled phenomenon/activity/process.

The formula described in step e1) uses the root of the weighted sum of squares, because the outcome of classification for each of the layers is considered as another independent random variable - due to which such an estimator is used. Such an action is the outcome of the modification of the classic formula used when estimating errors based on the errors of independent unit observations. It is possible to use another formula for the phenomena in whose case source layers are correlated with each other.

For technical reasons, the first, second and third database may be subbases derived from one main base.

Preferably, in step f) one ARLTMI is generated, common for all activities of the animate object, in the given geographic area, or several ARLTMIs, each of which is common for several different activities of the animate object, in the given geographic area, or a separate ARLTMI is generated for different activities of the animate object, in the given geographic area.

Preferably, source data involving physical quantities mentioned in step a) and b) is collected in the first database, a series of raster layers is prepared based on it, presenting these physical quantities/parameters in different moments in time. These layers are used in step e) to calculate the ARLTMI index.

Preferably, the measurements of physical quantities, which are mentioned in step a) and b), are performed and processed ongoingly.

Preferably, the measurements of physical quantities which are mentioned in step a) and b) are performed and processedevery 60 minutes, preferably every 30 minutes, more preferably every 15 minutes, and even more preferably every 10 and most preferably every 5 minutes.

Preferably, the parameters of a phenomenon or the activities of an object, particularly animate, in the given geographic area, are used to control the effectors, such as, e.g. drones, automatic sprayers and other remotely controlled devices and machines, in particular to determine the time and area of their action and/or define travel routes.

Preferably, data of long-term storage is used to evaluate the environmental impact of agricultural activity, in particular in terms of environmental degradation.

The object of the invention is also an arrangement for realising the method according to any of the preceding claims, comprising components specified below, configured and programmed in the following manner:

u.1) instruments/tools/sensors for collecting data, such as: satellites taking high resolution images, devices for measuring relative humidity, thermometers, barometers, pyrometers, anemometers, microphones, precipitation meters or other sensors distributed on the ground surface or moving in the air capable of communicating, preferably wirelessly, with a first server collecting source data, which is mentioned in step b);

u.2) a first server collecting source data, gathering data from these instruments for the collection of data, capable of communicating, preferably wirelessly, with these instruments for the collection of data;

u.3) a second server collecting data, for storing information about the values of parameters characterising the activities of objects, particularly animate, present in atmospheric air, acquired in step d);

u.4) a third server with Internet access, capable of communicating, preferably wirelessly, with external devices, with a calculation unit, intended for the generation/storage of thematic maps which are mentioned in step f);

u.5) a calculation unit for the performance of calculations indicated in steps c), e), f), g), capable of communicating with the first server collecting the data, the second server collecting the data and third server with Internet access, capable of downloading the data from the first database placed on the first server for the collection of data and from the second database, placed on the second server for the collection of data, and capable of recording data in the third database placed on the third server with Internet access, the calculation unit being programmed to calculate the ARLTMI and generate maps of the parameters of a phenomenon or the activities of an object, particularly animate, in the given geographic area; and:

u.6) a user terminal with Internet access, preferably a smartphone, a tablet, a portable or stationary computer, provided with a user interface implemented on this terminal and capable of communicating, preferably wirelessly, with the third server with Internet access, and capable of displaying a map fragment depicting the forecast parameters of a phenomenon or the activities of an object, particularly animate, in the given geographic area, generated in step f);

u.7) effectors, e.g. drones, automatic sprayers or other remotely controlled devices or machines, capable of communicating, preferably wirelessly, with the third server with Internet access and of downloading data from the third database, placed on this server and programmed and configured such that the action of these effectors, in particular the time, place and intensity of sprayings, depends on the data downloaded from the third database.

In a particular case, the first server, the second server and the third server may be the same, one, properly configured server realising the tasks of the three servers.

In a particular case, the first database, the second database and the third database are the same, one, properly configured database with properly configured record types, realising tasks and storing data from three source subbases, i.e. the first database, the second database, the third database.

Sample parameters of phenomena or activities of objects, particularly animate, which may be forecast using the method according to the present invention in the given geographic area are, among others the activity of pollinators; the effectiveness of agents for artificial pollination of plants; the activity of crop or tree pests; the activity of insect larvae; the activity of farm animals or agriculturally beneficial wild animals; the intensity of sowing spores of pathogens of crops or trees; the intensity of growth of plant inflorescences; the effectiveness of sprayings; the activity of pathogenic microorganisms; the activity of disease-spreading insects, such as ticks, mosquitoes; the concentration of atmospheric contaminants, such as smog or the intenseness of activity of factors causing changes in construction materials, paints, varnishes or the intenseness of activity of factors affecting human health.

The invention will now be presented in more detail in a preferable embodiment, with reference to the attached drawings, in which:

Fig. 1 shows the location of points subjected to triangulation in the first embodiment of the invention;

Fig. 2 shows the result of TIN transformation for six parameters affecting the activity of bees in the first embodiment of the invention;

Fig. 3 shows a reclassification table for the activity of bees depending on the temperature and relative humidity, p values filled out in the row and in the column;

Fig. 4 shows the distribution of f_temp values and the values of the ARLTMI index, where, 0 - no activity of bees, 3 - average activity, 4 - intense activity, in the first embodiment of the invention;

Fig. 5 shows the location of points subjected to triangulation in the second embodiment of the invention;

Fig. 6 shows the result of TIN transformation for two parameters affecting the choice of a proper moment for varnishing;

Fig. 7 shows a reclassification table for painting wood with varnishes under external conditions depending on the temperature and relative humidity, p values filled out in the row and in the column;

Fig. 8 shows the distribution of f_temp values and the values of the ARLTMI index, where 2 - the allowed weather conditions for varnishing, 3 - the most preferable conditions for varnishing;

Fig. 9 shows the location of points subjected to triangulation in the third embodiment of the invention;

Fig. 10 shows the distribution of temperature and humidity generated as an outcome of interpolation (TIN) for two parameters affecting the heat stress of dairy cows;

Fig. 11 shows the outcome of the action of the THI algorithm = (1.8xT+32) - ((0.55-0.0055xRH) x (1.8xT-26)) (*National Research Council, 1971, after: Bohmanova et al., 2007*) for selected ranges of temperature (T) and humidity (RH); class 4- dark grey (50-67.9), class 3 - white (68-71.9), class 2 - light grey (72-87.9), class 1 - black (> 88);

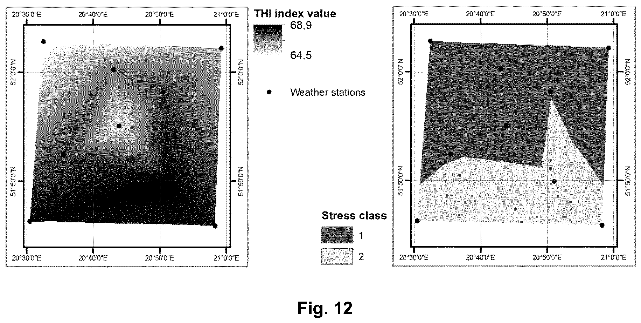

Fig. 12 shows the distribution of f_temp values and the values of the ARLTMI index, where 4 - no stress , 3 - possible heat stress of dairy cows.

The figures were prepared using information from Bohmanova J., Misztal I., Cole J.B., 2007, Temperature-Humidity Indices as Indicators of Milk Production Losses due to Heat Stress, J. Dairy Sci. 90: 1947-1956 and Strzaał-kowska N., Markiewicz-Kȩszycka M., Krzyzewski J., Bagnicka E., Lipinska P., Józwik A., 2014, Wppływ stresu na wydajnosc i jakosc mleka oraz ppłodnosc wysoko wydajnych krów mlecznych, Med. Weter. 2014, 70(2):84-89.

**AN EMBODIMENT OF THE INVENTION USING AN EXAMPLE OF A MODEL FOR THE ACTIVITY OF BEES**

1. The preparation of data is realised for each raster/layer (type) from the given moment in time.

The model for the activity of bees assumes the use of 6 types of raster layers (type).

type1 - cloud cover

type2 - precipitation

type3 - radiance

type4 - wind speed

type5 - air temperature

type6 - relative humidity

The first stage involves the collection of data followed by its rasterisation.

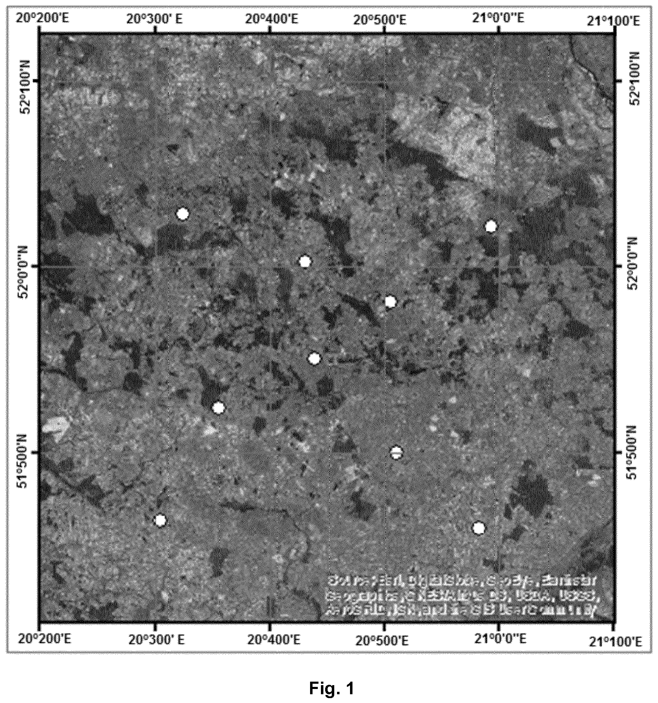

The data simulated in a real format is generated based on points with meteorological information. In the first step, a point vector file was created and georeferenced. UTM system, WGS84, zone 34 north. Fig. 1 presents the location of said points.

Nine points located in the southern part of Mazovia were assigned 6 values each, specifying weather conditions in the given moment, which is presented in table 1.

## Table 1. Weather parameters for meteorological stations.

| ID | Temperature [°C] | Relative humidity [%] | Precipitation (1 - no, 2 - yes) | Wind speed [m/s] | Radiance [W/m$^2$] | Cloud cover (1 - yes, 2 - no) |
|---|---|---|---|---|---|---|
| 1 | 20 | 52 | 1 | 3 | 680 | 1 |
| 2 | 21 | 57 | 2 | 2.6 | 670 | 1 |
| 3 | 21 | 42 | 1 | 3 | 700 | 2 |
| 4 | 19 | 62 | 1 | 2.4 | 670 | 1 |
| 5 | 22 | 51 | 1 | 2 | 700 | 2 |
| 6 | 23 | 47 | 1 | 2 | 700 | 2 |
| 7 | 22 | 50 | 1 | 2 | 690 | 2 |
| 8 | 23 | 45 | 1 | 2 | 690 | 2 |
| 9 | 23 | 43 | 1 | 2 | 700 | 2 |

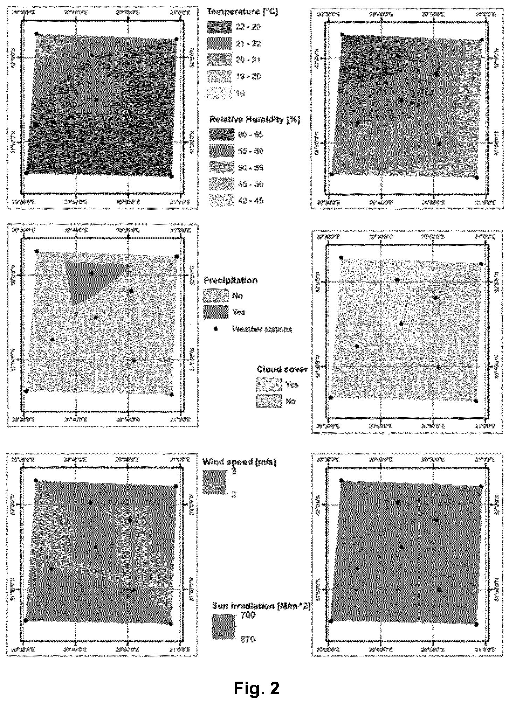

For each weather parameter, triangulation was performed in ArcGIS software, using the Create TIN function, which allows the interpolation of values between points, and as a result a layer of irregular triangles was created (triangulated irregular network). Subsequently, each of the TIN layers was transformed into a raster to enable the performance of calculations. Fig. 2 presents the result of TIN transformation for 6 individual parameters affecting the activity of bees. The resulting raster has dimensions of 249 columns per 237 rows, GSD = 132 [m].

2. The aggregation of data

**Operation for each type of raster/meteorological layer conducted independently/in parallel**

a) Calculating the statistics for the given layer for a selected scene in the given moment in time

type1 - cloud cover: values [0 - cloud cover, 1 - no cloud cover]

type2 - precipitation: [0 - precipitation, 1 - no precipitation]

type3 - radiance: min 670, max 700, average 690.06 W/m$^2$

8

type4 - wind speed: min 2 m/s, max 3 m/s, average 2.29 m/s

type5 - air temperature: min 19°C, max 23°C, average 21.76°C

type6 - relative humidity: min 42%, max 62%, average 49.4%

b) Checking the criteria of **threshold values for all raster types (type 1, 2, 3, 4, 5, 6)** for the possibility of modelling a given phenomenon in a given place by checking whether the pixel values of the individual types of layers **(type)** fulfil the defined criteria, if not, assigning a zero value to the given pixel. The first criterion involves checking whether the data is numerical in a floating-point format. Subsequently, 4 categories were assigned thresholds, according to which the existence of a phenomenon is determined.

type1 - cloud cover: if = 0 then DN TYPE NWZ = 0

type2 - precipitation: if = 0 then DN TYPE NWZ = 0

type3 - radiance: if < 200 W/m$^2$ then DN TYPE NWZ = 0

type4 - wind speed: if > 2.5 m/s then DN TYPE NWZ = 0

c) Creating the proper number of classes **(p-classes)** and the aggregation of data (e.g. using the ISOCLASS algorithm)

For all layers, the respective numbers of p-classes from 0 to 7 were defined, where 0 means no phenomenon and 7 its highest intensity

type1 - cloud cover: values 0 =0; 1=7

type2 - precipitation: values 0 =0; 1=7

type3 - radiance: values 0 =0; 1=7

type4 - wind speed: values 0 =0; 1=7

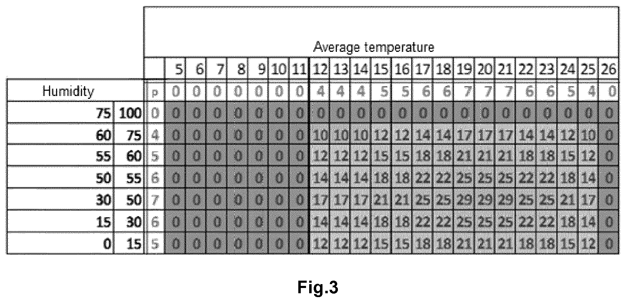

type5 - air temperature: classes from 0 to 7 according to the reclassification table in Fig. 3

type6 - relative humidity: classes from 0 to 7 according to the reclassification table in Fig. 3

Defining the "p" value allows filling the raster cells with integer values corresponding to the label of the given class: **from 0 to 7 according to the above list.** As an outcome, a raster for the given meteorological observation is generated.

3. Raster operations

**An operation conducted for all types of a raster/meteorological layer simultaneously (proper transformation)**

- determining a proper algorithm for the Aggregation of basic raster data involves using formula 1, considering the predetermined weights - for the model of the activity of bees all the parameters are considered evenly, which is why the weights have been determined as equalling 1,
- determining weights for individual type layers - in the present examples the data has an even impact on the outcome, which is why the weights for each of the types take on the value of "1",

Subsequently, pixels in which a value of zero is present are checked and these areas are excluded from modelling, so as to conduct the calculations only for proper pixels.
Subsequently - conducting a mathematical operation for each pixel of the final output raster based on raster values for the given meteorological observation, by

- calculating the value of the index based on: **the weight of the given layer (w) and values from 1 to p, for individual layers (type)**

$$f\_temp = \sqrt[2]{\sum_1^{lwz}\left(w * p_{type}^2\right)}$$

where:

lwz – the number of raster source layers

Formula 1. The algorithm allowing the calculation of the value of the ARLTMI index

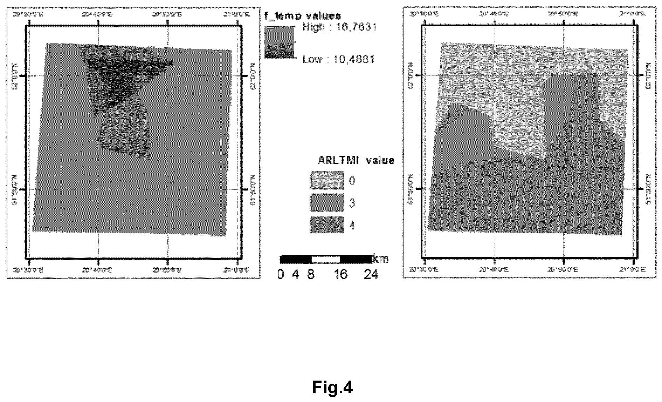

The outcome of using formula 1 on layers of meteorological parameters is presented in Fig. 4. Based on it, a final image presenting index classes is created. The presented example uses the method of quantiles in order to divide the dataset into categories.

Subsequently - creating final index classes (from 0 to f=5) using the method of quantiles. Fig. 4 presents the final result of the method's action along with the interpretation of its outcomes. Values of the ARLTMI index have been assigned to particular raster cells, wherein

**0 - no activity of bees**

**1** - **very low**

**2 - low**

**3 - average**

**4 - high**

**5 - very high**

In the given example there are 3 classes. Intense, average and no activity for these areas where there is a cloud cover and it rains.

**AN EMBODIMENT OF THE INVENTION BASED ON A MODEL OF USING INFORMATION FROM THE LABEL OF AN ACRYLIC VARNISH**

The selected sample varnish is intended for wooden constructions (furniture, fences, garden elements etc.) present in open air. The producers assume that the user will varnish in temperatures within different ranges, usually between 15 and 25 °C. In addition, a commonly accepted practice is painting with considerable relative humidity (approximately 60%).

1. The preparation of data comprises each raster/layer (type) from the given moment in time

The model for choosing a proper moment for using the varnish assumes the use of 2 types of raster layers (type).

Type1 - air temperature

Type2 - relative humidity

The first stage involves the collection of data followed by its rasterisation.

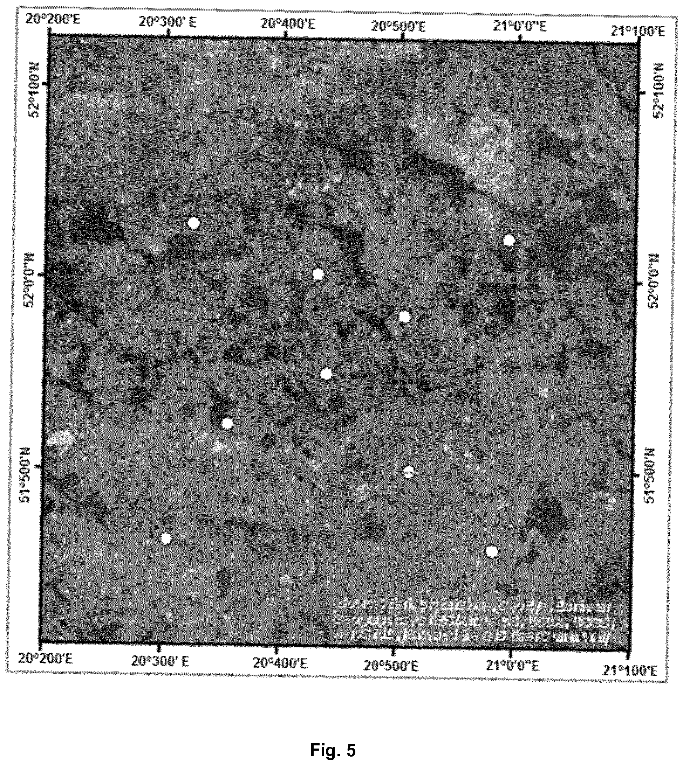

The data simulated in a real format is generated based on points with meteorological information. In the first step, a point vector file was created and georeferenced. UTM system, WGS84, zone 34 north. Fig. 5 presents the location of points.

Nine points located in the southern part of Mazovia were assigned 2 values each, specifying weather conditions in the given moment, presented in table 2.

## Table 2. Weather parameters for meteorological stations.

| ID | Temperature [°C] | Relative humidity [%] |
|---|---|---|
| 1 | 20 | 52 |
| 2 | 21 | 57 |
| 3 | 21 | 42 |
| 4 | 19 | 62 |
| 5 | 22 | 51 |
| 6 | 23 | 47 |
| 7 | 22 | 50 |
| 8 | 23 | 45 |
| 9 | 23 | 43 |

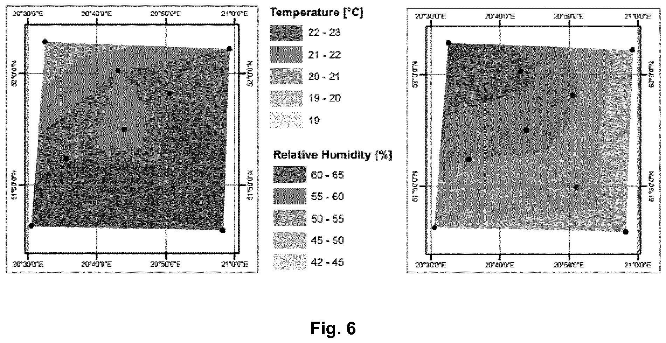

For each weather parameter triangulation was performed in ArcGIS software, Create TIN function, which allows the interpolation of values between points, and as a result a layer of irregular triangles was created (triangulated irregular network). Subsequently, each of the TIN layers was transformed into a raster to enable the performance of calculations. Fig. 6 presents the result of TIN transformation for 2 parameters affecting the choice of a proper moment for varnishing. The resulting raster has dimensions of 249 columns per 237 rows, GSD = 132 [m].

2. The aggregation of data

**Operation for each type of raster/meteorological layer conducted independently/in parallel**

a) Calculating the statistics for the given layer for a selected scene in the given moment in time

Type1 - air temperature: min 19°C, max 23°C, average 21.76°C

Type2 - relative humidity: min 42%, max 62%, average 49.4%

b) Checking the criteria of **threshold values for all raster types (type 1, 2) for** the possibility of modelling a given phenomenon in a given place by checking whether the pixel values of the individual types of layers **(type)** fulfil the defined criteria, if not, assigning a zero value to the given pixel. The first criterion involves checking whether the data is numerical in a floating-point format. In this case there are no threshold values for which DN TYPE NWZ would equal 0.

c) Creating the proper number of classes (**p-classes**) and the aggregation of data (e.g. using the ISOCLASS algorithm)

For all layers, the respective numbers of p-classes from 0 to 7 were defined, where 0 means no phenomenon and 7 its highest intensity. Fig. 3 presents the dependence between the 2 analysed parameters. This is a general model of weather conditions which favour the most efficient painting with wood varnishes in outdoor conditions, due to air temperature and relative humidity. The above values are assumed based on literature sources available on the Internet, presenting a generalised situation.

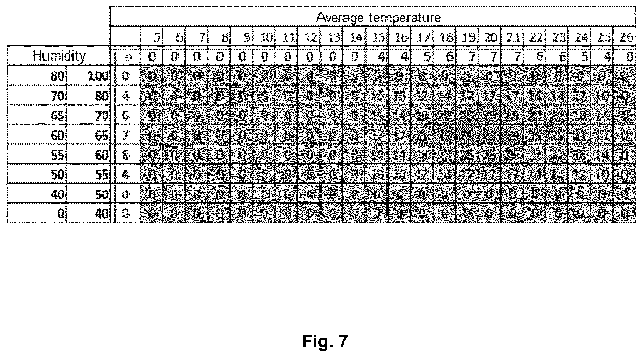

Subsequently, defining the "p" value allows filling the raster cells with integer values corresponding to the label of the given class: **from 0 to 7 according to Fig. 7.** As an outcome of this, a raster for the given meteorological observation is generated.

- the most preferable temperature conditions are 18-22°C;

- the allowed temperature conditions are 15-25°C;

- the most preferable humidity conditions are 60-65%;

- the allowed humidity conditions are 50-80%.

Final categories defining the weather conditions which affect varnishing are:

0 - no conditions;

1 - disadvantageous temperature and humidity conditions;

2 - the allowed temperature and humidity conditions;

3 - the most preferable temperature and humidity conditions.

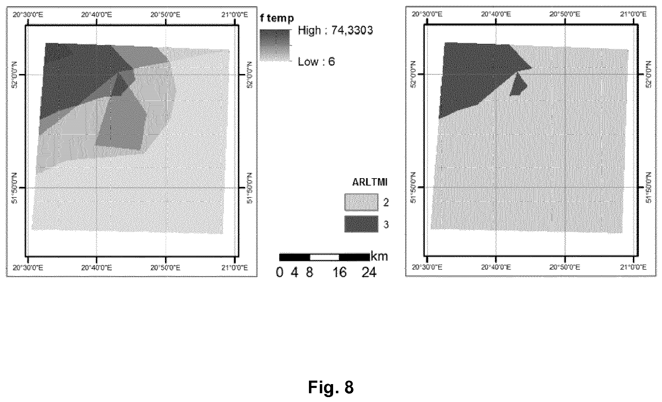

In the analysed case, two of the above-mentioned categories can be distinguished (Fig. 8).

Type1 - air temperature: classes from 0 to 7 according to the reclassification table in Fig. 7

Type2 - relative humidity: classes from 0 to 7 according to the reclassification table in Fig. 7

Defining the "p" value allows filling the raster cells with integer values corresponding to the label of the given class: **from 0 to 7 according to the above list.** As an outcome, a raster for the given meteorological observation is generated.

3. Raster operations

**An operation conducted for all types of a raster/meteorological layer simultaneously (proper transformation):**

- determining a proper algorithm for the Aggregation of basic raster data involves using formula 1, considering the predetermined weights; for the model for supporting the realisation of the guidelines of a wood varnish label all the parameters are considered evenly, which is why the weights have been determined as equalling 1.

Subsequently, pixels in which a value of zero is present are checked and these areas are excluded from modelling, so as to conduct the calculations only for proper pixels.

Subsequently - conducting a mathematical operation for each pixel of the final output raster based on raster values for the given meteorological observation.

Calculating the values of the index based on: **the weight of the given layer (w) and values from 1 to p, for individual layers (type)**

$$f\_temp = \sqrt[2]{\sum_1^{lwz}\left(w * p_{type}^2\right)}$$

where:

lwz – the number of raster source layers

Formula 2. The algorithm allowing the calculation of the value of the ARLTMI index

The outcome of using formula 2 on layers of meteorological parameters is presented in Fig. 8. Based on it, a final image presenting index classes is created.

Fig. 8 presents the final result of the method's action along with the interpretation of its outcomes. Values of the ARLTMI index have been assigned to particular raster cells, 2 classes being present in the given case:

2 - the allowed temperature and humidity conditions;

3 - the most preferable temperature and humidity conditions.

**AN EMBODIMENT OF THE INVENTION BASED ON A MODEL OF APPLICATION FOR ESTIMATING THE MOMENTS OF THE OCCURRENCE OF A HEAT STRESS OF COWS**

The production of dairy products is highly robotised and intensified. When managing a household producing milk, cutting edge technologies are used for example for automatic milking or the selection of the most suitable feed. The amount and quality of obtained milk depend to a high extent on weather conditions. In too high temperature and relative humidity, a decrease is noted in dairy production, even by 30 - 35%. The heat stress of cows may cause losses from 300 to 600 PLN, during one year per 1 animal.

The heat stress of cows is defined by algorithms taking into account the temperature (T) and relative humidity (RH) of air, e.g. the "Temperature Humidity Index" THI = (1.8xT+32) - ((0.55-0.0055xRH) x (1.8xT-26)) ((National Research Council, 1971), after: Bohmanova et al., 2007). The temperature and humidity index THI (Temperature Humidity Index) allows determining proper conditions for grazing cattle. Most algorithms describing the behaviour of cows in stressful conditions involve indoor conditions; the above-mentioned formula has been developed for cattle staying in open air, which is why it has been used in the present document.

Due to the use of the developed methodology, it is possible to specify when and to which pastures farmers should lead their livestock. Intentional allocation of livestock will reduce the negative impact of heat stress, increase the production of milk and the quality of reproduction. Additional meteorological parameters being an element of the Institute of Aviation's system are capable of providing available models with detail on the impact of the remaining weather parameters. In addition, the acquired multispectral satellite data will allow the acquisition of information on the quality and amount of biomass on pastures. This information is also valuable for the remaining farmers who handle the grazing of farm animals.

1. The preparation of data comprises each raster/layer (type) from the given moment in time

The model for detecting the heat stress of dairy cows assumes the use of 2 types of raster layers (type).

Type1 - air temperature

Type2 - relative humidity

The first stage involves the collection of data followed by its rasterisation.

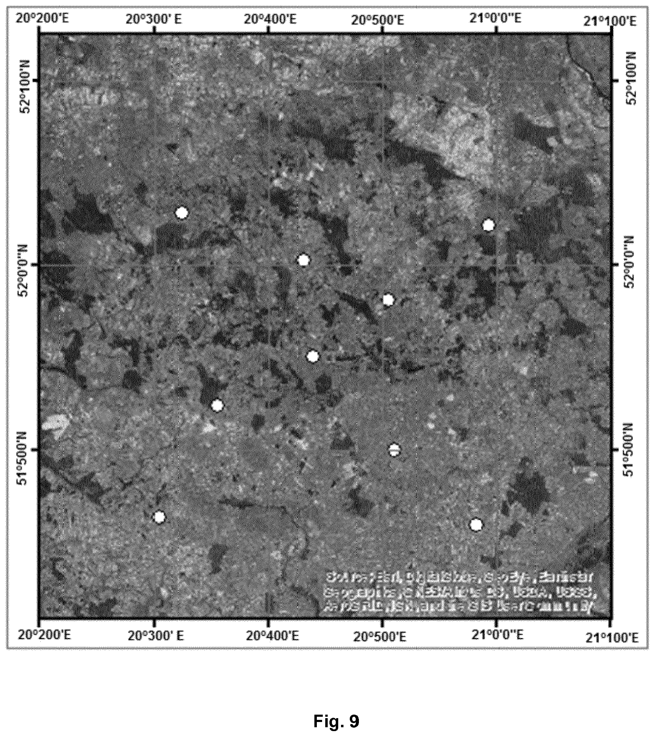

The data simulated in a real format is generated based on points with meteorological information. In the first step, a point vector file was created and georeferenced. UTM system, WGS84, zone 34 north. Fig. 9 presents the location of points.

Nine points located in the southern part of Mazovia were assigned 2 values each, specifying weather conditions in the given moment, presented in table 1.

## Table 3. Weather parameters for meteorological stations.

| ID | Temperature [°C] | Relative humidity [%] |
|---|---|---|
| 1 | 20 | 52 |
| 2 | 21 | 57 |
| 3 | 21 | 42 |
| 4 | 19 | 62 |
| 5 | 22 | 51 |
| 6 | 23 | 47 |
| 7 | 22 | 50 |
| 8 | 23 | 45 |
| 9 | 23 | 43 |

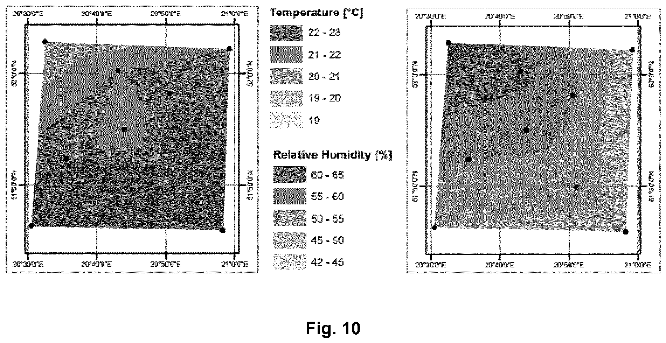

For each weather parameter triangulation was performed in ArcGIS software, Create TIN function, which allows the interpolation of values between points, and as a result a layer of irregular triangles is created (*triangulated irregular network*). Subsequently, each of the TIN layers was transformed into a raster to enable performing calculations. Fig. 10 presents the result of TIN processing for 2 parameters affecting the estimation of heat stress for dairy cows. The resulting raster has dimensions of 249 columns per 237 rows, GSD = 132 [m].

2. The aggregation of data

**Operation for each type of raster/meteorological layer conducted independently/in parallel**

a) Calculating the statistics for the given layer for a selected scene in the given moment in time

Type1 - air temperature: min 19°C, max 23°C, average 21.76°C

Type2 - relative humidity: min 42%, max 62%, average 49.4%

b) Checking the criteria of **threshold values for all raster types (type 1, 2)** for the possibility of modelling a given phenomenon in a given place by checking whether the pixel values of the individual types of layers **(type)** fulfil the defined criteria, if not, assigning a zero value to the given pixel. The first criterion involves checking whether the data is numerical in a floating-point format. In this case there are no threshold values for which DN TYPE NWZ would equal 0.

c) Creating a proper number of classes **(p-classes)** in this case involves defining the range of values and assigning an integer value to the individual pixels. For temperature this will result in the creation of 5 p-classes from 19 to 23, while for humidity there will be 19 of them, from a value of 42 to 60. The number of classes does not have to be equal for each type, it may vary.

Proper numbers of p-classes have been defined for all layers.

Type1 - air temperature: 5 p-classes from 19 to 23

Type2 - relative humidity: 19 p-classes from 42 to 60

Defining the "p" value allows filling the raster cells with integer values corresponding to the label of the given class: **from 19 to 23 or from 42 to 60.** As an outcome, a raster for the given meteorological observation is generated.

3. Raster operations

**An operation conducted for all types of a raster/meteorological layer simultaneously (proper transformation):**

- determining a proper algorithm for the Aggregation of basic raster data involves using formula 3 instead of the formula for f_temp presented above; this is an exceptional situation, since the methodology takes into account the use of predetermined solutions in the form of formulas describing certain phenomena.

Formula 3 describes a method for calculating the THI index (Temperature Humidity Index) based on two independent random variables: air temperature (°C) and relative humidity (%). F-temp takes on the values of the THI index.

$$\text{Formula 3: THI} = (1.8 \times \text{type1} + 32) - ((0.55 - 0.0055 \times \text{type2}) \times (1.8 \times \text{type1} - 26))$$

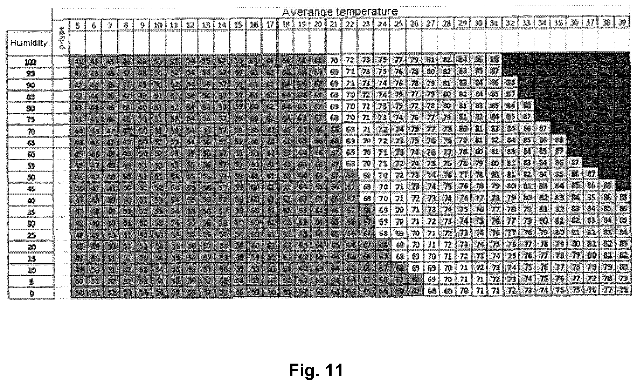

*((National Research Council, 1971), after: Bohmanova et al., 2007).*
The classification of data has been derived from the literature (National Research Council, 1971, after: Bohmanova et al., 2007). Taking into account the final THI index, which has defined ranges of classes, there is no need for the classification of data in order to establish its amount. Fig. 11 presents the values of the THI index for selected values of temperature and humidity. It is apparent that along with an increase in humidity and temperature, the conditions become increasingly inconvenient. It is assumed that the threshold value for which there are no problems with the grazing of cattle is 67.9 (class 4). If this value is recorded for several subsequent days, stress symptoms may occur (class 3: values 68-71.9). The THI index takes on a value above 72 (class 2) for stressful conditions and 88 for very high stress (class 1) (Strzałkowska et al., 2014). The ARLTMI index takes on the markings of the classes described above.
The present invention may be successfully used for modelling numerous phenomena/processes significant from the standpoint of industry and human activity, e.g. the activity of pollinators; the effectiveness of agents for artificial pollination of plants; the activity of crop or tree pests; the activity of insect larvae; the activity of farm animals or agriculturally beneficial wild animals; the intensity of sowing spores of pathogens of crops or trees; the intensity of growth of plant inflorescences; the effectiveness of sprayings; the activity of pathogenic micro-organisms; the activity of disease-spreading insects, such as ticks, mosquitoes; the concentration of atmospheric contaminants, such as smog or the intenseness of activity of factors causing changes in construction materials, paints, varnishes or the intenseness of activity of factors affecting human health.

**Claims**

1. A method for forecasting the activities of an animate object, the animate object being pollinators such as bees and bumblebees, in a given geographic area, comprising the steps of:

   a) performing the measurements of physical quantities, characterising the condition of the atmosphere and/or soil and/or plantlife;
   b) recording the data acquired in step a) in the first database on the first server collecting the source data;
   c) processing the source data recorded in the first database in step b) by a calculation unit, comprising the steps of:

   i. in a case when the data is not presented in a raster form, converting the data to a raster form;
   ii. in a case when the data has no georeference, providing the data with georeference by integration with existing cartographic data of the given area, to the form of layers;
   iii. in a case when there are empty raster cells, filling empty raster cells by conducting operations such as, e.g.: extrapolation, interpolation or triangulation of data;
   iv. determining the final geometric parameters of the raster: cropping and rescaling the raster into m- columns and n-rows, with a specified Ground Sample Distance (GSD), being the distance between the centres of individual pixels of a raster measured in real terrain, expressed in [m];
   v. calculating statistics for the given map/layer based, among others on historical data, creating the statistics of the frequency of occurrence of specified values of given parameters and grouping the values (classification);
   vi. checking the criteria, in particular the threshold values, for the possibility of forecasting the activities of the animate object, in the given geographic area, by checking the values in specified places: points or pixels of a raster image created in step iv in the individual types of layers or "$type_n$" maps; whether they fulfil the predefined criteria, and assigning a value of zero if they do not fulfil them;
   vii. creating a proper number of value classes "p-classes", performed manually (if the classification thresholds are known) or using the ISOCLASS/ISODATA algorithm, k-means clustering, based on statistical values and/or Euclidean distances in the space of values;
   viii. filling the cells of a raster generated based on the procedure described in the previous steps with integer values, corresponding to the label of a given class, taking on values from 0 to p, where p corresponds to the value of the given pixel, obtained in the process of classification;

   d) recording the data acquired in step c) in the second database;
   e) generating, based on the data recorded in step d), for the specified area, the Aggregated Raster Local Temporary Meteorological Index (ARLTMI) via steps comprising:

   e1) calculating the ARLTMI index based on the weight of the given layer (w) and values from 1 to p, for individual layers, according to the formula:

$$ f\_temp = \sqrt[2]{\sum_1^{lwz}(w * p_{type}^2)} \, , $$

   where

   lwz: a number equal to the number of raster source layers,
   $p_{type}$: the number of classes in the given layer
   f_temp: a temporary index, based on which the final value of a raster cell is calculated in the form of an integer of the ARLTMI index;
   or

   e2) in a case when there is a dependence between layers (type) defined by an empirical formula or a formula derived from the literature and/or there is a proven dependence between layers - it is more preferable to use said empirical formula or the one derived from the literature;
   e3) creating final class ranges for the index based on the analysis of f_temp, from 0 to f, where

   0: corresponds to the area excluded from modelling,

1: is the minimum value,

f: is the maximum value;

e4) Filling the cells of the ARLTMI raster with integer values, corresponding to the label of the given class, from 0 to f;

f) generating, using a calculation unit - based on the ARLTMI acquired in step e) - at least one map, depicting the forecast of activities of the animate object, in the given area and recording this at least one map in the third database connected to a server with Internet access

g) sharing at least a fragment of the map acquired in step f) on a user terminal with Internet access, in response to the user's query introduced via the user interface implemented on this terminal;

wherein the physical quantities measured in step a) are chosen form meteorological and environmental parameters, in particular: temperature, pressure, relative humidity, radiance, wind speed, land morphology;

wherein the measurements in step a) are performed by means of satellites or other sensors distributed on the ground or moving in the air, using dedicated meteorological sensors;

wherein upon receiving a query from the user terminal, the calculation unit processes the collected data and sends back to the user terminal the information/recommendations involving in particular the suggested time, place and type of actions necessary to undertake in relation to agricultural activity, namely relating to in which places sprayings are suggested due to the activity of pathogens, and in which places sprayings may be associated with damage to pollinators such as bees and bumblebees, which information the terminal presents to the user,

wherein effectors in form of automatic sprayers are used, said effectors arranged to be capable of communicating with the third server with Internet access and of downloading data from the third database placed on this server, said effectors being programmed and configured such that the action of these effectors, in particular the time, place and intensity of sprayings, depends on the data downloaded from the third database, wherein said effectors operate automatically based on said data downloaded from the third database.

2. The method according to claim 1 in which in step f) one ARLTMI is generated, common for all activities of the animate object, in the given geographic area, or several ARLTMIs, each of which is common for several different activities of the animate object, in the given geographic area, or a separate ARLTMI is generated for different activities of the animate object, in the given geographic area.

3. The method according to claim 1 or 2, in which source data involving physical quantities mentioned in step a) and b) is collected in the first database, a series of raster layers is prepared based on it, presenting these physical quantities/parameters in different moments in time.

4. The method according to claim 1, 2 or 3, in which the measurements of physical quantities which are mentioned in step a) and b) are performed and processed ongoingly.

5. The method according to claim 4, in which the measurements of physical quantities which are mentioned in step a) and b) are performed and processed every 60 minutes or every 30 minutes or every 15 minutes or every 10 minutes or every 5 minutes.

6. The method according to claim 1, 2, 3, 4 or 5, in which the activities of the animate object, in the given geographic area, are used to control the effectors, such as e.g. drones, automatic sprayers and other remotely controlled devices and machines, in particular to determine the time and area of their action and/or to define travel routes.

7. The method according to claim 1, 2, 3, 4, 5 or 6, in which data of long-term storage is used to evaluate the environmental impact of agricultural activity, in particular in terms of environmental degradation.

8. An arrangement for realising the method according to any of the preceding claims, comprising components specified below, configured and programmed in the following manner:

u.1) instruments/tools/sensors for collecting data, such as: satellites taking high resolution images, devices for measuring relative humidity, thermometers, barometers, pyrometers, anemometers, microphones, precipitation meters or other sensors distributed on the ground surface or moving in the air capable of communicating with a first server collecting source data, which is mentioned in step b);

u.2) a first server collecting source data, gathering data from these instruments for the collection of data, capable of communicating with these instruments for the collection of data;

u.3) a second server collecting data, for storing information about the values of parameters characterising the activities of the animate objects, present in atmospheric air, acquired in step d);

u.4) a third server with Internet access, capable of communicating with external devices, with a calculation unit, intended for the generation/storage of thematic maps which are mentioned in step f);

u.5) a calculation unit for the performance of calculations indicated in steps c), e), f), g), capable of communicating with the first server collecting the data, the second server collecting the data and third server with Internet access, capable of downloading the data from the first database placed on the first server for the collection of data, and from the second database, placed on the second server, for the collection of data, and capable of recording data in the third database placed on the third server with Internet access, the calculation unit being programmed to calculate the ARLTMI and generate maps of the parameters of a phenomenon or the activities of the animate object, in the given geographic area;

and:

u.6) a user terminal with Internet access provided with a user interface implemented on this terminal and capable of communicating with the third server with Internet access, and capable of displaying a map fragment depicting the forecast parameters of the activities of the animate object, in the given geographic area, generated in step f);

u.7) effectors, e.g. drones, automatic sprayers or other remotely controlled devices or machines, capable of communicating with the third server with Internet access and of downloading data from the third database, placed on this server and programmed and configured such that the action of these effectors, in particular the time, place and intensity of sprayings, depends on the data downloaded from the third database.

**9.** The arrangement according to claim 8, in which case the first server, the second server and the third server are the same, one, properly configured server realising the tasks of the three servers.

**10.** The arrangement according to claim 8 or 9, in which the first database, the second database and the third database are the same, one, properly configured database with properly configured record types, realising tasks and storing data from three source subbases, i.e. the first database, the second database, the third database.


**Patentansprüche**

**1.** Verfahren zur Vorhersage der Aktivitäten eines belebten Objekts, wobei es sich bei dem belebten Objekt um Bestäuber wie Bienen und Hummeln handelt, in einem gegebenen geografischen Gebiet, umfassend die folgenden Schritte:

a) Durchführung von Messungen physikalischer Größen, die den Zustand der Atmosphäre und/oder des Bodens und/oder der Pflanzenwelt charakterisieren;

b) Aufzeichnung der in Schritt a) erfassten Daten in der ersten Datenbank auf dem ersten Server, der die Quelldaten sammelt;

c) Verarbeitung der in Schritt b) in der ersten Datenbank aufgezeichneten Quelldaten durch eine Berechnungseinheit, die die folgenden Schritte umfasst:

i. falls die Daten nicht in einer Rasterform vorliegen, die Konvertierung der Daten in eine Rasterform;

ii. falls die Daten keine Georeferenz haben, Bereitstellung der Daten mit Georeferenz durch Integration mit bestehenden kartographischen Daten des gegebenen Gebiets in Form von Schichten;

iii. falls leere Rasterzellen vorhanden sind, das Auffüllen leerer Rasterzellen durch Operationen wie z. B. Extrapolation, Interpolation oder Triangulation von Daten;

iv. Bestimmung der endgültigen geometrischen Parameter des Rasters: Beschneidung und Neuskalierung des Rasters in m-Spalten und n-Zeilen mit einer bestimmten Ground Sample Distance (GSD), d. h. dem Abstand zwischen den Zentren der einzelnen Pixel eines Rasters, gemessen im realen Gelände, ausgedrückt in [m];

v. Berechnung von Statistiken für die gegebene Karte/Ebene, u. a. auf der Grundlage historischer Daten, Erstellung von Statistiken über die Häufigkeit des Auftretens bestimmter Werte bestimmter Parameter und Gruppierung der Werte (Klassifizierung);

vi. Überprüfung der Kriterien, insbesondere der Schwellenwerte, für die Möglichkeit der Vorhersage der Aktivitäten des belebten Objekts in dem gegebenen geografischen Gebiet durch Überprüfung der Werte an bestimmten Stellen: Punkte oder Pixel eines in Schritt iv erstellten Rasterbildes in den einzelnen Ebenentypen oder "Typ $_n$"-Karten; ob sie die vordefinierten Kriterien erfüllen, und Zuweisung eines Werts von Null, wenn sie sie nicht erfüllen;

vii. Erstellung einer angemessenen Anzahl von Wertklassen "p-classes", manuell (wenn die Klassifizierungsschwellen bekannt sind) oder mit Hilfe des ISOCLASS/ISODATA-Algorithmus, k-means-Clustering, auf der Grundlage von statistischen Werten und/oder euklidischen Abständen im Wertebereich;

viii. Füllen der Zellen eines Rasters, das auf der Grundlage des in den vorangegangenen Schritten beschriebenen Verfahrens erzeugt wurde, mit ganzzahligen Werten, die dem Etikett einer bestimmten Klasse entsprechen und Werte von 0 bis p annehmen, wobei p dem Wert des gegebenen Pixels entspricht, der im Rahmen des Klassifizierungsprozesses ermittelt wurde;

d) Aufzeichnung der in Schritt c) erfassten Daten in der zweiten Datenbank;

e) Erzeugen des Aggregated Raster Local Temporary Meteorological Index (ARLTMI) auf der Grundlage der in Schritt d) aufgezeichneten Daten für das spezifizierte Gebiet mittels der folgenden Schritte:

e1) Berechnung des ARLTMI-Index auf der Grundlage des Gewichts der gegebenen Schicht (w) und der Werte von 1 bis p für die einzelnen Schichten gemäß der Formel:

$$f\_temp = \sqrt[2]{\sum_1^{lwz}(w * p_{type}^2)} \, ,$$

wobei

lwz: eine Zahl, die der Anzahl der Rasterquellenebenen entspricht,
$P_{type}$: die Anzahl der Klassen in der gegebenen Ebene
f_temp: einen vorläufigen Index, auf dessen Grundlage der endgültige Wert einer Rasterzelle in Form einer ganzen Zahl des ARLTMI-Index berechnet wird;
oder

e2) falls es eine Abhängigkeit zwischen den Schichten (Typ) gibt, die durch eine empirische Formel oder eine aus der Literatur abgeleitete Formel definiert ist, und/oder in dem es eine nachgewiesene Abhängigkeit zwischen den Schichten gibt, es vorzuziehen ist, die empirische Formel oder die aus der Literatur abgeleitete Formel zu verwenden;

e3) die Erstellung der endgültigen Klassenbereiche für den Index auf der Grundlage der Analyse von f_temp von 0 bis f,
wobei

0: dem Bereich entspricht, der von der Modellierung ausgeschlossen ist,
1: der Mindestwert ist,
f: der Höchstwert ist;

e4) Füllen der Zellen des ARLTMI-Rasters mit ganzzahligen Werten, die dem Label der gegebenen Klasse entsprechen, von 0 bis f;

f) Erzeugen, unter Verwendung einer Berechnungseinheit - basierend auf der in Schritt e) erfassten ARLTMI - mindestens einer Karte, die die Vorhersage der Aktivitäten des belebten Objekts in dem gegebenen Gebiet darstellt, und Aufzeichnen dieser mindestens einen Karte in der dritten Datenbank, die mit einem Server mit Internetzugang verbunden ist

g) Teilen mindestens eines Fragments der in Schritt f) erfassten Karte auf einem Benutzerterminal mit Internetzugang als Reaktion auf die Anfrage des Benutzers, die über die auf diesem Terminal implementierte Benutzerschnittstelle gestellt wird;

wobei die in Schritt a) gemessenen physikalischen Größen aus meteorologischen und umweltbezogenen Parametern ausgewählt werden, insbesondere: Temperatur, Druck, relative Luftfeuchtigkeit, Strahlungsdichte, Windgeschwindigkeit, Landmorphologie;

wobei die Messungen in Schritt a) mit Hilfe von Satelliten oder anderen Sensoren, die am Boden verteilt sind oder sich in der Luft bewegen, unter Verwendung spezieller meteorologischer Sensoren durchgeführt werden;

wobei die Berechnungseinheit bei Empfang einer Abfrage vom Benutzerterminal die gesammelten Daten verarbeitet und an das Benutzerterminal die Informationen/Empfehlungen zurücksendet, die insbesondere die vorgeschlagene Zeit, den Ort und die Art der notwendigen Maßnahmen in Bezug auf die landwirtschaftliche Tätigkeit betreffen, nämlich in Bezug darauf, an welchen Orten Spritzungen aufgrund der Aktivität von Krankheitserregern vorgeschlagen werden und an welchen Orten Spritzungen mit Schäden an Bestäubern wie Bienen und Hummeln verbunden sein können, wobei diese Informationen dem Benutzer vom Terminal präsentiert werden,

wobei Effektoren in Form von automatischen Sprühgeräten verwendet werden, wobei die Effektoren so beschaffen sind, dass sie mit dem dritten Server mit Internetzugang kommunizieren und Daten von der dritten Datenbank, die sich auf diesem Server befindet, herunterladen können, wobei die Effektoren so programmiert und konfiguriert sind, dass die Aktion dieser Effektoren, insbesondere die Zeit, der Ort und die Intensität der Sprühvorgänge, von den von der dritten Datenbank heruntergeladenen Daten abhängt, wobei die Effektoren automatisch auf der Grundlage der von der dritten Datenbank heruntergeladenen Daten arbeiten.

2. Verfahren nach Anspruch 1, bei dem in Schritt f) eine ARLTMI erzeugt wird, die für alle Aktivitäten des belebten Objekts in dem gegebenen geographischen Gebiet gemeinsam ist, oder mehrere ARLTMIs, von denen jede für mehrere verschiedene Aktivitäten des belebten Objekts in dem gegebenen geographischen Gebiet gemeinsam ist, oder eine separate ARLTMI für verschiedene Aktivitäten des belebten Objekts in dem gegebenen geographischen Gebiet erzeugt wird.

3. Verfahren nach Anspruch 1 oder 2, bei dem Quelldaten, die die in Schritt a) und b) erwähnten physikalischen Größen beinhalten, in der ersten Datenbank gesammelt werden und auf deren Grundlage eine Reihe von Rasterschichten erstellt wird, die diese physikalischen Größen/Parameter zu verschiedenen Zeitpunkten darstellen.

4. Verfahren nach Anspruch 1, 2 oder 3, bei dem die Messungen der in Schritt a) und b) genannten physikalischen Größen fortlaufend durchgeführt und verarbeitet werden.

5. Verfahren nach Anspruch 4, bei dem die Messungen der in Schritt a) und b) genannten physikalischen Größen alle 60 Minuten oder alle 30 Minuten oder alle 15 Minuten oder alle 10 Minuten oder alle 5 Minuten durchgeführt und verarbeitet werden.

6. Verfahren nach Anspruch 1, 2, 3, 4 oder 5, bei dem die Aktivitäten des belebten Objekts in dem gegebenen geografischen Gebiet verwendet werden, um die Effektoren, wie z. B. Drohnen, automatische Sprühgeräte und andere ferngesteuerte Geräte und Maschinen, zu steuern, insbesondere um den Zeitpunkt und das Gebiet ihres Einsatzes zu bestimmen und/oder um Fahrtrouten festzulegen.

7. Verfahren nach Anspruch 1, 2, 3, 4, 5 oder 6, bei dem die Daten der Langzeitspeicherung verwendet werden, um die Auswirkungen der landwirtschaftlichen Tätigkeit auf die Umwelt zu bewerten, insbesondere im Hinblick auf die Verschlechterung der Umwelt.

8. Anordnung zur Durchführung des Verfahrens nach einem der vorhergehenden Ansprüche, umfassend die nachfolgend genannten Komponenten, die in der folgenden Weise konfiguriert und programmiert sind:

u.1) Instrumente/Werkzeuge/Sensoren zur Datenerfassung, wie z.B.: Satelliten, die hochauflösende Bilder aufnehmen, Geräte zur Messung der relativen Luftfeuchtigkeit, Thermometer, Barometer, Pyrometer, Anemometer, Mikrofone, Niederschlagsmesser oder andere Sensoren, die auf der Bodenoberfläche verteilt sind oder sich in der Luft bewegen und die in der Lage sind, mit einem ersten Server zu kommunizieren, der die Quelldaten sammelt, die in Schritt b) erwähnt werden;

u.2) einen ersten Server, der Quelldaten sammelt, Daten von diesen Instrumenten für die Datenerfassung sammelt und in der Lage ist, mit diesen Instrumenten für die Datenerfassung zu kommunizieren;

u.3) einen zweiten Server, der Daten sammelt, um Informationen über die Werte von Parametern zu speichern, die die Aktivitäten der in der atmosphärischen Luft vorhandenen belebten Objekte charakterisieren, die im Schritt d) erfasst wurden;

u.4) einen dritten Server mit Internetzugang, der in der Lage ist, mit externen Geräten zu kommunizieren, mit einer Berechnungseinheit, die für die Erzeugung/Speicherung von thematischen Karten, die in Schritt f) erwähnt werden, bestimmt ist;

u.5 ) eine Berechnungseinheit für die Durchführung der in den Schritten c), e), f), g) angegebenen Berechnungen, die in der Lage ist, mit dem ersten Server, der die Daten sammelt, dem zweiten Server, der die Daten sammelt, und dem dritten Server mit Internetzugang zu kommunizieren, die in der Lage ist, die Daten aus der ersten Datenbank, die auf dem ersten Server für die Sammlung von Daten angeordnet ist, herunterzuladen, und von der zweiten Datenbank, die sich auf dem zweiten Server befindet, für die Sammlung von Daten herunterzuladen, und in der Lage ist, Daten in der dritten Datenbank, die sich auf dem dritten Server mit Internetzugang befindet, zu speichern, wobei die Berechnungseinheit so programmiert ist, dass sie die ARLTMI berechnet und Karten der Parameter eines Phänomens oder der Aktivitäten des belebten Objekts in dem gegebenen geografischen Gebiet erzeugt;

und:

u.6) ein Benutzerterminal mit Internetzugang, das mit einer Benutzerschnittstelle ausgestattet ist, die auf diesem Terminal implementiert ist und in der Lage ist, mit dem dritten Server mit Internetzugang zu kommunizieren, und in der Lage ist, ein Kartenfragment anzuzeigen, das die Vorhersageparameter der Aktivitäten des belebten Objekts in dem gegebenen geografischen Gebiet darstellt, das in Schritt f) erzeugt wurde;

u.7) Effektoren, z.B. Drohnen, automatische Sprühgeräte oder andere ferngesteuerte Geräte oder Maschinen, die in der Lage sind, mit dem dritten Server mit Internetzugang zu kommunizieren und Daten aus der dritten Datenbank herunterzuladen, die auf diesem Server platziert und so programmiert und konfiguriert sind, dass die Aktion dieser Effektoren, insbesondere die Zeit, der Ort und die Intensität der Besprühungen, von den aus der dritten Datenbank heruntergeladenen Daten abhängt.

9. Anordnung nach Anspruch 8, wobei der erste Server, der zweite Server und der dritte Server ein und derselbe, richtig konfigurierte Server sind, der die Aufgaben der drei Server erfüllt.

10. Anordnung nach Anspruch 8 oder 9, bei der die erste Datenbank, die zweite Datenbank und die dritte Datenbank ein und dieselbe, ordnungsgemäß konfigurierte Datenbank mit ordnungsgemäß konfigurierten Datensatztypen sind, die Aufgaben ausführt und Daten aus drei Quellteilbasen speichert, d.h. der ersten Datenbank, der zweiten Datenbank und der dritten Datenbank.

## Revendications

1. Une méthode pour prévoir les activités d'un objet animé, l'objet animé étant des pollinisateurs tels que des abeilles et des bourdons, dans une zone géographique donnée, comprenant les étapes suivantes :

   a) réaliser les mesures des grandeurs physiques caractérisant l'état de l'atmosphère et/ou du sol et/ou de la flore ;
   b) enregistrer les données acquises dans l'étape a) dans la première base de données sur le premier serveur collectant les données sources ;
   c) traiter les données sources enregistrées dans la première base de données dans l'étape b) par une unité de calcul, comprenant les étapes suivantes :

   i. dans le cas où les données ne sont pas présentées sous une forme tramée, convertir les données vers une forme tramée ;
   ii. dans le cas où les données n'ont pas de géoréférence, fournir les données avec géoréférence par intégration avec les données cartographiques existantes de la zone donnée, sous forme de couches ;
   iii. dans le cas où il y a des cellules tramées vides, remplir les cellules tramées vides en effectuant des opérations telles que, par ex., l'extrapolation, l'interpolation ou la triangulation des données ;
   iv. déterminer les paramètres géométriques finaux de la trame : recadrer et redimensionner la trame en m colonnes et n lignes, avec une distance d'échantillonnage au sol (GSD) spécifiée, c'est-à-dire la distance entre les centres des pixels individuels d'une trame mesurée en terrain réel, exprimée en [m] ;
   v. calculer des statistiques pour la carte/couche donnée en se basant, entre autres, sur des données historiques, créer les statistiques de la fréquence d'occurrence de valeurs spécifiées de paramètres donnés et regrouper les valeurs (classification) ;
   vi. vérifier les critères, en particulier les valeurs de seuil, pour la possibilité de prévoir les activités de l'objet animé, dans la zone géographique donnée, en vérifiant les valeurs dans des endroits spécifiés : points ou pixels d'une image tramée créée dans l'étape iv dans les différents types de couches ou cartes "$type_n$" ; s'ils remplissent les critères prédéfinis, et en attribuant une valeur de zéro s'ils ne les remplissent pas ;
   vii. créer un nombre approprié de classes de valeurs "p-classes", effectué manuellement (si les seuils de classification sont connus) ou en utilisant l'algorithme ISOCLASS/ISODATA, le partitionnement en k-moyennes, basé sur les valeurs statistiques et/ou les distances euclidiennes dans l'espace des valeurs ;
   viii. remplir les cellules d'une trame générée sur la base de la procédure décrite dans les étapes précédentes avec des valeurs entières, correspondant à l'étiquette d'une classe donnée, prenant des valeurs de 0 à p, où p correspond à la valeur du pixel donné, obtenue dans le processus de classification ;

d) enregistrer les données acquises dans l'étape c) dans la deuxième base de données ;
e) générer, sur la base des données enregistrées dans l'étape d), pour la zone spécifiée, l'Indice météorologique temporaire local de la trame agrégée (ARLTMI) via les étapes suivantes :

e1) calculer l'indice ARLTMI sur la base du poids de la couche donnée (w) et des valeurs de 1 à p, pour les couches individuelles, selon la formule :

$$f\_temp = \sqrt[2]{\sum_1^{lwz}(w * p_{type}^2)} \, ,$$

où

lwz: un nombre égal au nombre de couches sources tramées,
Ptype: le nombre de classes dans la couche donnée
f_temp: un indice temporaire, sur la base duquel la valeur finale d'une cellule tramée est calculée sous la forme d'un nombre entier de l'indice ARLTMI ;
ou

e2) dans le cas où il y a une dépendance entre les couches (type) définie par une formule empirique ou une formule dérivée de la littérature et/ou il y a une dépendance prouvée entre les couches - il est plus préférable d'utiliser ladite formule empirique ou celle dérivée de la littérature ;
e3) créer des plages de classes finales pour l'indice sur la base de l'analyse de f_temp, de 0 à f,
où

0: correspond à la zone exclue de la modélisation,
1: est la valeur minimale,
f: est la valeur maximale ;

e4) Remplir les cellules de la trame ARLTMI avec des valeurs entières, correspondant à l'étiquette de la classe donnée, de 0 à f ;

f) générer, à l'aide d'une unité de calcul - sur la base de l'ARLTMI acquise dans l'étape e) - au moins une carte, décrivant la prévision des activités de l'objet animé, dans la zone donnée et enregistrer cette au moins une carte dans la troisième base de données connectée à un serveur ayant accès à Internet
g) partager au moins un fragment de la carte acquise dans l'étape f) sur un terminal utilisateur disposant d'un accès Internet, en réponse à la requête de l'utilisateur introduite via l'interface utilisateur mise en œuvre sur ce terminal ;
dans laquelle les quantités physiques mesurées dans l'étape a) sont choisies parmi les paramètres météorologiques et environnementaux, en particulier : température, pression, humidité relative, radiance, vitesse du vent, morphologie du terrain ;
dans laquelle les mesures de l'étape a) sont effectuées au moyen de satellites ou d'autres capteurs répartis sur le sol ou se déplaçant dans l'air, en utilisant des capteurs météorologiques spécialisés ;
dans laquelle, à la réception d'une requête du terminal utilisateur, l'unité de calcul traite les données collectées et renvoie au terminal utilisateur les informations/recommandations impliquant en particulier la suggestion du temps, du lieu et du type d'actions nécessaires à entreprendre en relation avec l'activité agricole, à savoir concernant les lieux dans lesquels des pulvérisations sont suggérées en raison de l'activité d'agents pathogènes, dans lesquels les pulvérisations peuvent être associées à des dommages aux pollinisateurs tels que les abeilles et les bourdons, lesquelles informations étant présentées par le terminal à l'utilisateur,
dans laquelle des effecteurs sous forme de pulvérisateurs automatiques sont utilisés, lesdits effecteurs étant agencés pour être capables de communiquer avec le troisième serveur avec accès à Internet et de télécharger des données à partir de la troisième base de données placée sur ce serveur, lesdits effecteurs étant programmés et configurés de telle sorte que l'action de ces effecteurs, en particulier le temps, le lieu et l'intensité des pulvérisations, dépende des données téléchargées à partir de la troisième base de données, dans laquelle lesdits effecteurs fonctionnent automatiquement sur la base desdites données téléchargées à partir de la troisième base de données.

2. La méthode selon la revendication 1 dans laquelle dans l'étape f) un ARLTMI est généré, commun à toutes les activités de l'objet animé, dans la zone géographique donnée, ou plusieurs ARLTMI, dont chacun est commun à plusieurs activités différentes de l'objet animé, dans la zone géographique donnée, ou un ARLTMI distinct est généré pour des activités différentes de l'objet animé, dans la zone géographique donnée.

3. La méthode selon la revendication 1 ou 2, dans laquelle des données sources comprenant des quantités physiques mentionnées dans les étapes a) et b) sont collectées dans la première base de données, une série de couches tramées est préparée sur cette base, présentant ces quantités/paramètres physiques à différents moments dans le temps.

4. La méthode selon la revendication 1, 2 ou 3, dans laquelle les mesures des quantités physiques qui sont mentionnées dans l'étape a) et b) sont effectuées et traitées en continu.

5. La méthode selon la revendication 4, dans laquelle les mesures des quantités physiques qui sont mentionnées dans l'étape a) et b) sont effectuées et traitées toutes les 60 minutes ou toutes les 30 minutes, ou toutes les 15 minutes, ou toutes les 10 minutes, ou toutes les 5 minutes.

6. La méthode selon la revendication 1, 2, 3, 4 ou 5, dans laquelle les activités de l'objet animé, dans la zone géographique donnée, sont utilisées pour commander les effecteurs, tels que par ex. des drones, des pulvérisateurs automatiques et d'autres dispositifs et machines commandés à distance, en particulier pour déterminer le temps et la zone de leur action et/ou pour définir des itinéraires de déplacement.

7. La méthode selon la revendication 1, 2, 3, 4, 5 ou 6, dans laquelle les données de stockage à long terme sont utilisées pour évaluer l'impact environnemental de l'activité agricole, en particulier en termes de dégradation de l'environnement.

8. Un agencement pour réaliser la méthode selon l'une quelconque des revendications précédentes, comprenant des composants spécifiés ci-dessous, configurés et programmés de la manière suivante :

u.1) des instruments/outils/capteurs pour collecter des données, tels que : des satellites prenant des images à haute résolution, des dispositifs pour mesurer l'humidité relative, des thermomètres, des baromètres, des pyromètres, des anémomètres, des microphones, des pluviomètres ou d'autres capteurs répartis sur la surface du sol ou se déplaçant dans l'air, capables de communiquer avec un premier serveur collectant les données sources, qui est mentionné dans l'étape b) ;

u.2) un premier serveur collectant les données sources, recueillant les données de ces instruments pour la collecte de données, capable de communiquer avec ces instruments pour la collecte de données ;

u.3) un deuxième serveur de collecte de données, pour stocker des informations sur les valeurs des paramètres caractérisant les activités des objets animés, présents dans l'air atmosphérique, acquises dans l'étape d) ;

u.4) un troisième serveur avec accès à Internet, capable de communiquer avec des dispositifs externes, avec une unité de calcul, destiné à la génération/au stockage de cartes thématiques qui sont mentionnées dans l'étape f) ;

u.5) une unité de calcul pour l'exécution des calculs indiqués dans les étapes c), e), f), g), capable de communiquer avec le premier serveur collectant les données, le deuxième serveur collectant les données et le troisième serveur avec accès à Internet, capable de télécharger les données à partir de la première base de données placée sur le premier serveur pour la collecte de données, et de la deuxième base de données, placée sur le deuxième serveur, pour la collecte de données, et capable d'enregistrer des données dans la troisième base de données placée sur le troisième serveur avec accès à Internet, l'unité de calcul étant programmée pour calculer l'ARLTMI et générer des cartes des paramètres d'un phénomène ou des activités de l'objet animé, dans la zone géographique donnée ;

et :

u.6) un terminal utilisateur avec accès à Internet, muni d'une interface utilisateur mise en oeuvre sur ce terminal et capable de communiquer avec le troisième serveur avec accès à Internet et capable d'afficher un fragment de carte décrivant les paramètres de prévision des activités de l'objet animé, dans la zone géographique donnée, généré dans l'étape f) ;

u.7) des effecteurs, par ex. des drones, des pulvérisateurs automatiques ou d'autres dispositifs ou machines commandés à distance, capables de communiquer avec le troisième serveur avec accès à Internet et de télécharger des données à partir de la troisième base de données, placés sur ce serveur et programmés et configurés de telle sorte que l'action de ces effecteurs, en particulier le temps, le lieu et l'intensité des pulvéri-

sations, dépend des données téléchargées à partir de la troisième base de données.

9. L'agencement selon la revendication 8, auquel cas le premier serveur, le deuxième serveur et le troisième serveur sont le même, un seul, serveur proprement configuré réalisant les tâches des trois serveurs.

10. L'agencement selon la revendication 8 ou 9, dans lequel la première base de données, la deuxième base de données et la troisième base de données sont la même, une base de données proprement configurée avec des types d'enregistrement proprement configurés, réalisant des tâches et stockant des données provenant de trois sous-bases sources, c'est-à-dire la première base de données, la deuxième base de données, la troisième base de données.

**Fig. 1**

**Fig. 2**

| Humidity | | p | 5 | 6 | 7 | 8 | 9 | 10 | 11 | 12 | 13 | 14 | 15 | 16 | 17 | 18 | 19 | 20 | 21 | 22 | 23 | 24 | 25 | 26 |
|---|---|---|---|---|---|---|---|---|---|---|---|---|---|---|---|---|---|---|---|---|---|---|---|---|
| | | | 0 | 0 | 0 | 0 | 0 | 0 | 0 | 4 | 4 | 4 | 5 | 5 | 6 | 6 | 7 | 7 | 7 | 6 | 6 | 5 | 4 | 0 |
| 75 | 100 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 60 | 75 | 4 | 0 | 0 | 0 | 0 | 0 | 0 | 0 | 10 | 10 | 10 | 12 | 12 | 14 | 14 | 17 | 17 | 17 | 14 | 14 | 12 | 10 | 0 |
| 55 | 60 | 5 | 0 | 0 | 0 | 0 | 0 | 0 | 0 | 12 | 12 | 12 | 15 | 15 | 18 | 18 | 21 | 21 | 21 | 18 | 18 | 15 | 12 | 0 |
| 50 | 55 | 6 | 0 | 0 | 0 | 0 | 0 | 0 | 0 | 14 | 14 | 14 | 18 | 18 | 22 | 22 | 25 | 25 | 25 | 22 | 22 | 18 | 14 | 0 |
| 30 | 50 | 7 | 0 | 0 | 0 | 0 | 0 | 0 | 0 | 17 | 17 | 17 | 21 | 21 | 25 | 25 | 29 | 29 | 29 | 25 | 25 | 21 | 17 | 0 |
| 15 | 30 | 6 | 0 | 0 | 0 | 0 | 0 | 0 | 0 | 14 | 14 | 14 | 18 | 18 | 22 | 22 | 25 | 25 | 25 | 22 | 22 | 18 | 14 | 0 |
| 0 | 15 | 5 | 0 | 0 | 0 | 0 | 0 | 0 | 0 | 12 | 12 | 12 | 15 | 15 | 18 | 18 | 21 | 21 | 21 | 18 | 18 | 15 | 12 | 0 |

Average temperature

**Fig.3**

**Fig.4**

Fig. 5

Fig. 6

| Humidity | | p | Average temperature | | | | | | | | | | | | | | | | | | | | |
|---|---|---|---|---|---|---|---|---|---|---|---|---|---|---|---|---|---|---|---|---|---|---|---|
| | | | 5 | 6 | 7 | 8 | 9 | 10 | 11 | 12 | 13 | 14 | 15 | 16 | 17 | 18 | 19 | 20 | 21 | 22 | 23 | 24 | 25 | 26 |
| | | | 0 | 0 | 0 | 0 | 0 | 0 | 0 | 0 | 0 | 0 | 4 | 4 | 5 | 6 | 7 | 7 | 7 | 6 | 6 | 5 | 4 | 0 |
| 80 | 100 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 70 | 80 | 4 | 0 | 0 | 0 | 0 | 0 | 0 | 0 | 0 | 0 | 0 | 10 | 10 | 12 | 14 | 17 | 17 | 17 | 14 | 14 | 12 | 10 | 0 |
| 65 | 70 | 6 | 0 | 0 | 0 | 0 | 0 | 0 | 0 | 0 | 0 | 0 | 14 | 14 | 18 | 22 | 25 | 25 | 25 | 22 | 22 | 18 | 14 | 0 |
| 60 | 65 | 7 | 0 | 0 | 0 | 0 | 0 | 0 | 0 | 0 | 0 | 0 | 17 | 17 | 21 | 25 | 29 | 29 | 29 | 25 | 25 | 21 | 17 | 0 |
| 55 | 60 | 6 | 0 | 0 | 0 | 0 | 0 | 0 | 0 | 0 | 0 | 0 | 14 | 14 | 18 | 22 | 25 | 25 | 25 | 22 | 22 | 18 | 14 | 0 |
| 50 | 55 | 4 | 0 | 0 | 0 | 0 | 0 | 0 | 0 | 0 | 0 | 0 | 10 | 10 | 12 | 14 | 17 | 17 | 17 | 14 | 14 | 12 | 10 | 0 |
| 40 | 50 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 0 | 40 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

**Fig. 7**

**Fig. 8**

**Fig. 9**

33

Fig. 10

**Fig. 11**

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1864572 B1
- US 2013317749 A1
- US 2014303814 A1

**Non-patent literature cited in the description**

- Temperature-Humidity Indices as Indicators of Milk Production Losses due to Heat Stress. **BOHMANOVA J et al.** Journal of dairy science. American dairy science association, 04 January 2007, vol. 90, 1947-1956
- **BOHMANOVA J. ; MISZTAL I. ; COLE J.B.** Temperature-Humidity Indices as Indicators of Milk Production Losses due to Heat Stress. *J. Dairy Sci.,* 2007, vol. 90, 1947-1956
- *Med. Weter.,* 2014, vol. 70 (2), 84-89
- **BOHMANOVA et al.** Temperature Humidity Index. National Research Council, 1971